(19) Europäisches Patentamt

European Patent Office

Office européen des brevets

(11) **EP 4 642 025 A1**

(12) **EUROPEAN PATENT APPLICATION**

(43) Date of publication:
**29.10.2025 Bulletin 2025/44**

(21) Application number: **25170903.6**

(22) Date of filing: **16.04.2025**

(51) International Patent Classification (IPC):
**H04N 13/305** (2018.01)   **H04N 13/359** (2018.01)
**H04N 13/324** (2018.01)   **H04N 13/351** (2018.01)

(52) Cooperative Patent Classification (CPC):
**H04N 13/305; H04N 13/324; H04N 13/351;
H04N 13/359**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.04.2024   US 202463637383 P
17.10.2024   CN 202411454698**

(71) Applicant: **InnoLux Corporation
Jhunan Town
Miao li 35053 (TW)**

(72) Inventors:
• **LIOU, Hao-Yu**
**Jhunan Town, Miaoli County 35053 (TW)**
• **CHEN, Wei-Jen**
**Jhunan Town, Miaoli County 35053 (TW)**
• **LU, Wei-Yi**
**Jhunan Town, Miaoli County 35053 (TW)**
• **SUMI, Naoki**
**Jhunan Town, Miaoli County 35053 (TW)**
• **WENG, Ruey-Jer**
**Jhunan Town, Miaoli County 35053 (TW)**

(74) Representative: **Becker, Eberhard et al
Becker Kurig & Partner
Patentanwälte mbB
Bavariastraße 7
80336 München (DE)**

(54) **SWITCHABLE DISPLAY SYSTEM AND SWITCHING METHOD**

(57)    A switchable display system (100, 300, 400) includes a display panel (140, 340, 440, 500), an image source (120, 320, 420), a switching signal source (130, 330, 430), and a processing circuit (110, 310, 410). The display panel (140, 340, 440, 500) includes pixels containing a first pixel. The image source (120, 320, 420) is used to provide image data. The switching signal source (130, 330, 430) is used to provide a switching signal (S2). The processing circuit (110, 310, 410) is coupled to the display panel (140, 340, 440, 500), an image source (120, 320, 420), and a switching signal source (130, 330, 430), stores a correction algorithm (111, 311, 411), and is used to drive the display panel (140, 340, 440, 500) to display a three-dimensional or two-dimensional image (700) according to the switching signal (S2).

FIG. 1

EP 4 642 025 A1

## Description

### BACKGROUND

Technical Field

The disclosure relates to a system, and particularly relates to a switchable display system and a switching method thereof.

Description of Related Art

Conventional three-dimensional display devices are designed solely for displaying three-dimensional (stereoscopic) images. If the conventional three-dimensional display device is used to display a two-dimensional image, then due to the impact of the beam splitter lens on the display panel used to display the three-dimensional image, during the display process when using two-dimensional image data, the image resolution of the two-dimensional image displayed by the three-dimensional display device is reduced, and image distortion is likely to occur.

### SUMMARY

The disclosure is directed to a switchable display system and a switching method thereof, which can provide good display effects for three-dimensional images and two-dimensional images.

According to an embodiment of the disclosure, the switchable display system of the disclosure includes a display panel, an image source, a switching signal source, and a processing circuit. The display panel includes a plurality of pixels. The plurality of pixels include a first pixel. The image source is used to provide image data. The switching signal source is used to provide a switching signal. The processing circuit is coupled to the display panel, an image source, and a switching signal source. The processing circuit stores a correction algorithm and is used to drive the display panel to display a three-dimensional image or a two-dimensional image according to the switching signal. When the processing circuit drives the display panel to display the two-dimensional image according to the switching signal, the processing circuit switches a first brightness of the first pixel to a second brightness. The second brightness is determined based on a plurality of brightness values in the image data of a plurality of pixels of the same color adjacent to the first pixel and a plurality of weight values of the correction algorithm.

According to an embodiment of the disclosure, the switching method of the display system of the disclosure includes the following steps: providing image data through an image source; provide a switching signal through a switching signal source; driving the display panel to display a three-dimensional image or a two-dimensional image according to the switching signal through a processing circuit; and when the processing circuit drives the display panel to display the two-dimensional image according to the switching signal, switching a first brightness of a first pixel to a second brightness through the processing circuit. The second brightness is determined based on a plurality of brightness values in the image data of a plurality of pixels of the same color adjacent to the first pixel and a plurality of weight values of the correction algorithm.

Based on the above, the switchable display system and the switching method thereof disclosed in the disclosure can determine whether to display the three-dimensional image or the two-dimensional image according to the switching signal, and can adjust the brightness of pixels accordingly during the display of the two-dimensional image to provide a good display effect for the two-dimensional image.

In order to make the above features and advantages of the disclosure more comprehensible, embodiments are given below and described in detail with reference to the accompanying drawings.

### BRIEF DESCRIPTION OF THE DRAWINGS

FIG. 1 is a schematic diagram of a display system according to an embodiment of the disclosure.

FIG. 2 is a flow chart of a switching method of a display system according to an embodiment of the disclosure.

FIG. 3 is a schematic diagram of the display system according to an embodiment of the disclosure.

FIG. 4 is a schematic diagram of the display system according to an embodiment of the disclosure.

FIG. 5 is a schematic structural diagram of the display panel according to an embodiment of the disclosure.

FIG. 6A is a schematic diagram showing displaying a three-dimensional image according to an embodiment of the disclosure.

FIG. 6B is a schematic diagram of a display image corresponding to the three-dimensional image according to an embodiment of the disclosure.

FIG. 7A is a schematic diagram showing displaying a two-dimensional image according to an embodiment of the disclosure.

FIG. 7B is a schematic diagram of a display image corresponding to the two-dimensional image according to an embodiment of the disclosure.

FIG. 8 is a schematic diagram of pixel brightness adjustment according to an embodiment of the disclosure.

FIG. 9 is a schematic diagram of pixel brightness adjustment according to an embodiment of the disclosure.

FIG. 10 is a schematic diagram of pixel brightness adjustment according to an embodiment of the disclosure.

## DESCRIPTION OF THE EMBODIMENTS

Reference will now be made in detail to exemplary embodiments of the disclosure, examples of which are illustrated in the accompanying drawings. Whenever possible, the same reference signs are used in the drawings and the description to refer to the same or like parts.

Certain terms are used throughout the specification and appended claims to refer to particular components. Persons skilled in the art will appreciate that display device manufacturers may refer to the same component by different names. This document does not intend to distinguish between components that have the same function but are named differently. In the following description and claims, the words "including" and "comprising" are open-ended words and thus should be interpreted as meaning "including but not limited to...".

In some embodiments of the disclosure, terms such as "coupled", "interconnected" related to bonding and connection, unless otherwise defined, may refer to two structures being in direct contact, or may also refer to two structures not being in direct contact, in which there are other structures positioned between the two structures. Furthermore, the terms related to bonding and connection may also include situations where both structures are movable, or both structures are fixed. In addition, the term "coupled" includes any direct and indirect electrical connection means.

The ordinal numbers used in the specification and claims, such as "first", "second", are used to modify components. The terms do not imply or represent any previous ordinal number of the components, nor do the terms represent the order of one component to another component, or the order of manufacturing methods. The use of the plurality of ordinal numbers is merely used to clearly distinguish a component having a certain name from another component having the same name. The claims and the specification may not use the same words. Accordingly, the first component in the specification may be the second component in the claims. It should be noted that the following embodiments may replace, reorganize, or mix the technical features in several different embodiments to implement other embodiments without departing from the spirit of the disclosure.

The display device described in the disclosure may be an auto stereoscopic display device, but the disclosure is not limited thereto. In an embodiment, the display device described in the disclosure may include a virtual reality device, an augmented reality device, a head-up display device, a transparent display device, a sensor device, or a splicing device, but the disclosure is not limited thereto. The display device may be a bendable or flexible electronic device. The display device may be a non-self-luminous display device or a self-luminous display device. The sensor device may be a sensor device that senses capacitance, light, heat, or ultrasound, but the disclosure is not limited thereto. The display device may include electronic components such as passive components and active components, such as capacitors, resistors, inductors, diodes, and transistors. The diode may include a light emitting diode or a photodiode. The light emitting diode may include, for example, an inorganic light emitting diode, an organic light emitting diode (OLED), a mini LED, a micro LED, or a quantum dot LED, but the disclosure is not limited thereto. The splicing device may be, for example, a display splicing device, but the disclosure is not limited thereto. It should be noted that the display device may be any arrangement or combination of the foregoing components, but the disclosure is not limited thereto.

It should be understood that the features of several different embodiments may be replaced, reorganized, or mixed to implement other embodiments without departing from the spirit of the disclosure.

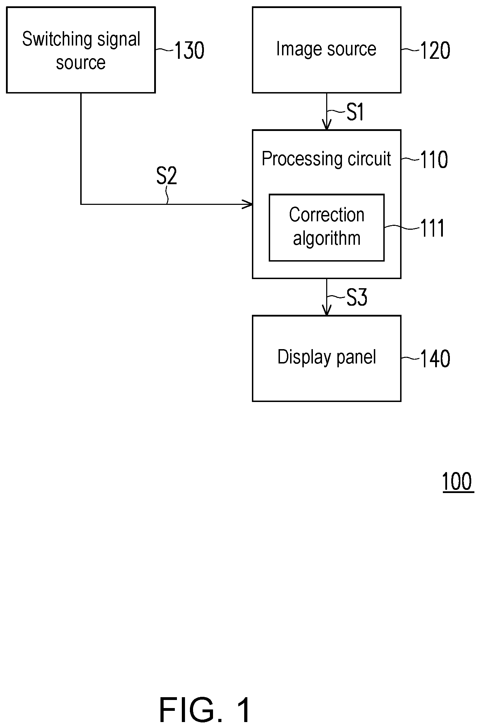

FIG. 1 is a schematic diagram of a display system according to an embodiment of the disclosure. Referring to FIG.

1, a display system 100 includes a processing circuit 110, an image source 120, a switching signal source 130, and a display panel 140. The processing circuit 110 is coupled to the image source 120, the switching signal source 130, and the display panel 140. In this embodiment, the display system 100 may realize an auto stereoscopic display function and a two-dimensional display function, but the disclosure is not limited thereto. In this embodiment, the processing circuit 110 may receive image data S1 from the image source 120, and receive a switching signal S2 from the switching signal source 130. In this embodiment, the switching signal S2 may be used to determine whether the processing circuit 110 drives the display panel 140 to perform a two-dimensional display mode or a three-dimensional display mode. The processing circuit 110 may determine whether to correct the image data S1 according to the switching signal S2, and may generate a corresponding drive signal S3 to the display panel 140 according to the uncorrected image data S1 or the corrected image data.

In this embodiment, the processing circuit 110 may be a display driver chip and has a storage unit to store a correction algorithm 111. In an embodiment, the processing circuit 110 may include, for example, a central processing unit (CPU), a graphics processing unit (GPU), or other programmable general-purpose or special-purpose microprocessors, a digital signal processor (DSP), an application specific integrated circuit (ASIC), a programmable logic device (PLD), other similar processing circuits, or combinations of the devices. In addition, the storage unit may include a memory and/or a database. The storage unit may be, for example, a nonvolatile memory (NVM). The storage unit may store the correction algorithm 111 or related programs, modules, systems, or image data for implementing the various embodiments of the disclosure, so as to be read and executed by the processing circuit 110 to implement the related functions and operations described in the various embodiments of the disclosure.

In this embodiment, the image source 120 may be, for example, a computer host, an image capturing device, or a related image data providing device, but the disclosure is not limited thereto. The image source 120 may provide image data S1 of a three-dimensional image or a two-dimensional image to the processing circuit 110. In this embodiment, the switching signal source 130 may be, for example, a physical button disposed on the display device, a virtual button on the display interface of the display device, or a functional circuit disposed in the processing circuit 110. The switching signal source 130 may generate the switching signal S2 according to user operation, system operation, or automatic analysis of the image data S1 by the processing circuit 110, so that the processing circuit 110 drives the display panel 140 to perform a two-dimensional display mode or a three-dimensional display mode.

In this embodiment, when the processing circuit 110 drives the display panel 140 to perform the three-dimensional display mode, the image data S1 obtained by the processing circuit 110 from the image source 120 may be view data with a plurality of perspective viewing pictures. Alternatively, the image data S1 may be view data of a perspective viewing picture, and may be further generated into a plurality of perspective viewing pictures after specific image processing. Alternatively, the image data S1 may be formed by two-dimensional image data and corresponding depth data.

In this embodiment, when the processing circuit 110 drives the display panel 140 to perform the two-dimensional display mode, the image data S1 obtained by the processing circuit 110 from the image source 120 may be view data with a plurality of perspective viewing pictures, and the processing circuit 110 may select one of the plurality of perspective viewing pictures to drive the display panel 140 through switching. Alternatively, the processing circuit 110 may switch to render one of the plurality of perspective viewing pictures to drive the display panel 140. Alternatively, the image data S1 is the view data of a single perspective viewing picture. Alternatively, the image data S1 may be formed by two-dimensional image data and corresponding depth data, but the processing circuit 110 may switch to select merely the two-dimensional image data to drive the display panel 140.

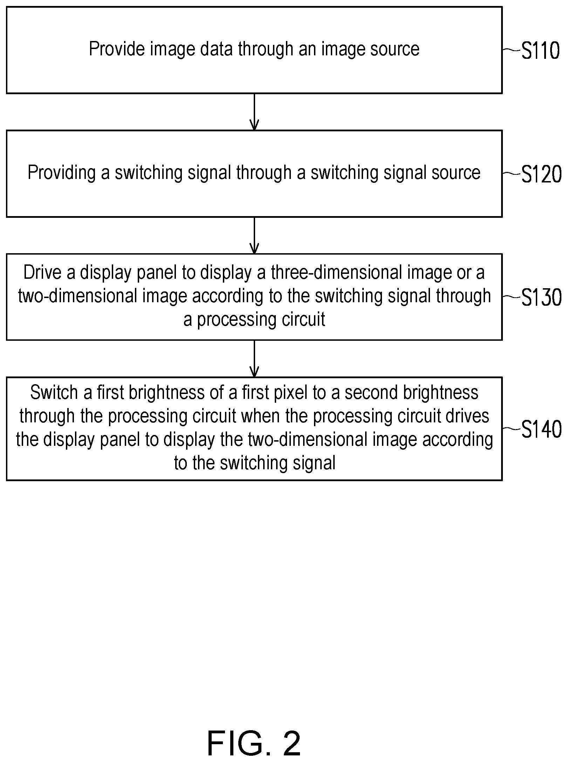

FIG. 2 is a flow chart of a switching method of a display system according to an embodiment of the disclosure. Referring to FIG. 1 and FIG. 2, the display system 100 may perform the following Steps S110 to S140. In Step S110, the image source 120 may provide the image data S1 to the processing circuit 110. In Step S120, the switching signal source 130 may provide the switching signal S2 to the processing circuit 110. In Step S130, the processing circuit 110 may drive the display panel 140 to display a three-dimensional image or a two-dimensional image according to the switching signal S2. In Step S140, when the processing circuit 110 drives the display panel 140 to display the two-dimensional image according to the switching signal S2, the processing circuit 110 may switch a first brightness of a first pixel in the display panel 140 to a second brightness. In this regard, the second brightness may be determined based on a plurality of brightness values in the image data S1 of a plurality of pixels of the same color adjacent to the first pixel and a plurality of weight values of the correction algorithm 111.

Therefore, in the process of the display panel 140 displaying the two-dimensional image, the processing circuit 110 may correct the image data S1 to generate corrected image data, and drive the display panel 140 according to the corrected image data. In this way, the brightness of the pixels of the display panel 140 can be effectively adjusted, so that the display panel 140 can display the two-dimensional image with good image resolution.

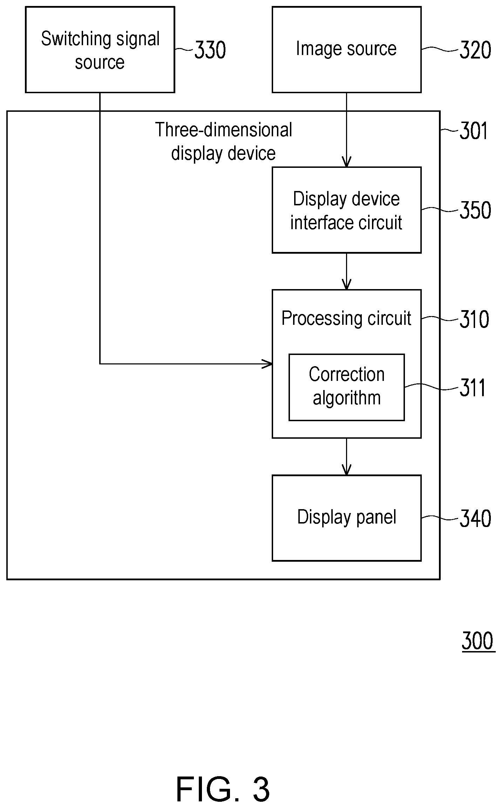

FIG. 3 is a schematic diagram of the display system according to an embodiment of the disclosure. Referring to FIG. 3, in some embodiments of the disclosure, a display system 300 includes a three-dimensional display device 301, a processing circuit 310, an image source 320, a switching signal source 330, a display panel 340, and a display device interface circuit 350. The display device interface circuit 350 is coupled between the image source 320 and the processing circuit 310. The processing circuit 310 is further coupled to the switching signal source 330 and the display panel 340. In some embodiments of the disclosure, the processing circuit 310, the display panel 340, and the display device interface circuit 350 are disposed in the three-dimensional display device 301. In some embodiments of the disclosure, the display device interface circuit 350 may include, for example, a high definition multimedia interface (HDMI), a DP (display port) interface, or a video graphics array (VGA) interface, and the disclosure is not limited thereto.

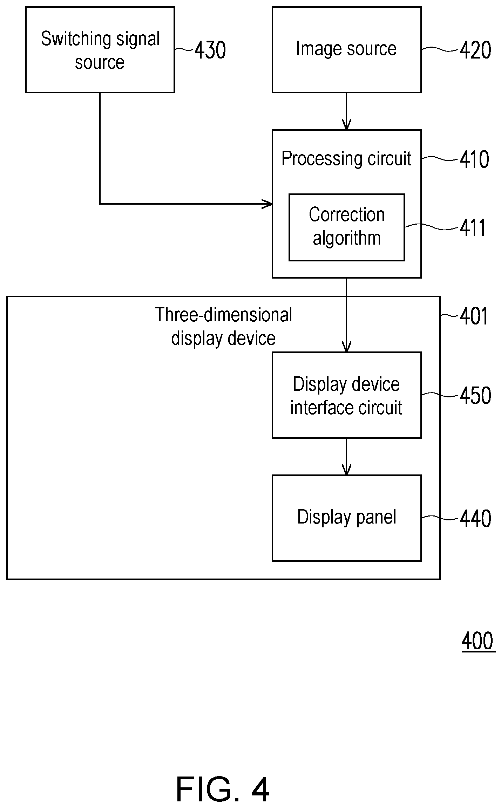

FIG. 4 is a schematic diagram of the display system according to an embodiment of the disclosure. Referring to FIG. 4, in some other embodiments of the disclosure, a display system 400 includes a three-dimensional display device 401, a processing circuit 410, an image source 420, a switching signal source 430, a display panel 440, and a display device interface circuit 450. The display device interface circuit 450 is coupled between the processing circuit 410 and the display panel 440. The processing circuit 410 is further coupled to the switching signal source 430. The display device interface circuit 450 is further coupled to the display panel 440. In some other embodiments of the disclosure, the display panel 440 and the display device interface circuit 450 are disposed in the three-dimensional display device 401. The processing circuit 410 may be implemented by an external independent processing chip or an external device (for example, a display player or a set-top box).

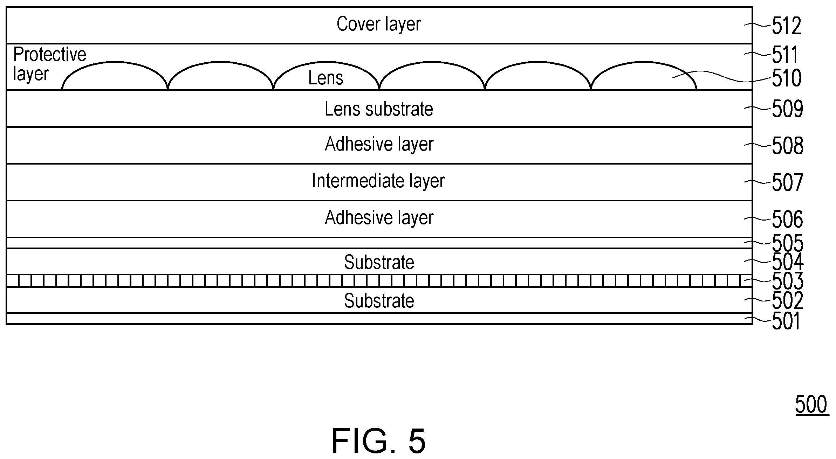

FIG. 5 is a schematic structural diagram of the display panel according to an embodiment of the disclosure. Referring to FIG. 5, the display panel described in various embodiments of the disclosure may implement the structure of a display panel 500 as shown in FIG. 5. FIG. 5 is a side cross-sectional view of the display panel 500. In this embodiment, the display panel 500 includes polarizing plates 501, 505, substrates 502, 504, a pixel array 503, an adhesive layer 506, an intermediate layer 507, an adhesive layer 508, a lens substrate 509, a lens array 510, a protective layer 511, and a cover layer 512. In this embodiment, a display layer may comprise the polarizing plates 501, 505, the substrates 502, 504 and the pixel array 503. The substrate 502 is disposed on the polarizing plate 501. The pixel array 503 has a plurality of light-emitting units arranged in an array, in which the plurality of light-emitting units may be a plurality of light emitting diodes. The pixel array 503 is disposed on the substrate 502. The substrate 504 is disposed on the pixel array 503. The polarizing plate 505 is disposed on the substrate 504. The adhesive layer 506 is disposed on the polarizing plate 505. The intermediate layer 507 is disposed on the adhesive layer 506. The adhesive layer 508 is disposed on the intermediate layer 507. The lens substrate 509 is disposed on the adhesive layer 508. The lens array 510 is disposed on the lens substrate 509, in which the lens array 510 includes a plurality of micro lenses, and the plurality of micro lenses may be a plurality of cylindrical lenses. The protective layer 511 is disposed on the lens array 510 to cover the plurality of cylindrical lenses. The cover layer 512 is disposed on the protective layer 511. In this embodiment, the haze provided by the protective layer 511 and the cover layer 512 is less than 10%, but the disclosure is not limited thereto.

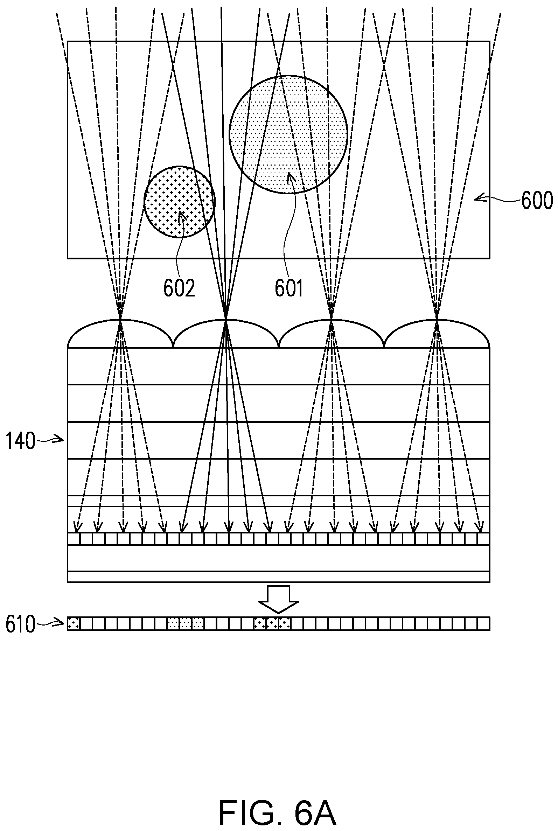

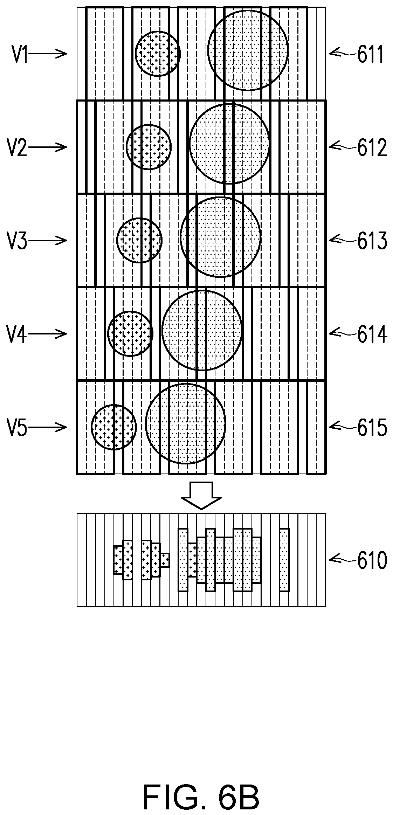

FIG. 6A is a schematic diagram showing displaying a three-dimensional image according to an embodiment of the disclosure. FIG. 6B is a schematic diagram of a display image corresponding to the three-dimensional image according to an embodiment of the disclosure. With reference to FIG. 6A and FIG. 6B, FIG. 6A and FIG. 6B are schematic diagrams of actual display images displayed by the display panel according to an embodiment of the disclosure. Referring to FIG. 1 and FIG. 6A, the image data S1 is taken as image data of the three-dimensional display image as an example. The processing circuit 110 may perform display operations of the three-dimensional display image. In this embodiment, the processing circuit 110 may combine the resultant data of each light projection path to generate an actual display image 600 (the actual result of displaying the three-dimensional image on the flat display screen). For example, as shown in FIG. 6A, from the multiple light projection paths between the three-dimensional image 600 and the display panel 140, it may be seen that a stereoscopic object image 601 and a stereoscopic object image 602 in the three-dimensional image 600 may be displayed at different corresponding positions of the actual display image 610, for example. Referring to FIG. 1 and FIG. 6B, a micro lens may be used as an example for light projection paths through five different angles of view. The display results of the plurality of pixels at a first angle of view V1 of each micro lens in the display panel 140 may be as the display results of a sub-image 611. By analogy, the display results of the plurality of pixels at a second to fifth angle of view V2 to V5 of each micro lens in the display panel 140 may be as the display results of sub-images 612 to 615. As a result, after the sub-images 611 to 615 are superimposed, the display panel 140 may display the actual display image 610 as shown in FIG. 6B. Therefore, the viewer may view the stereoscopic display image with the stereoscopic object image 601 and the stereoscopic object image 602 through the actual display image 610 displayed by the display panel 140. That is, the two-dimensional actual display image 610 may be imaged as the three-dimensional image with the stereoscopic object image 601 and the stereoscopic object image 602 in the human eye.

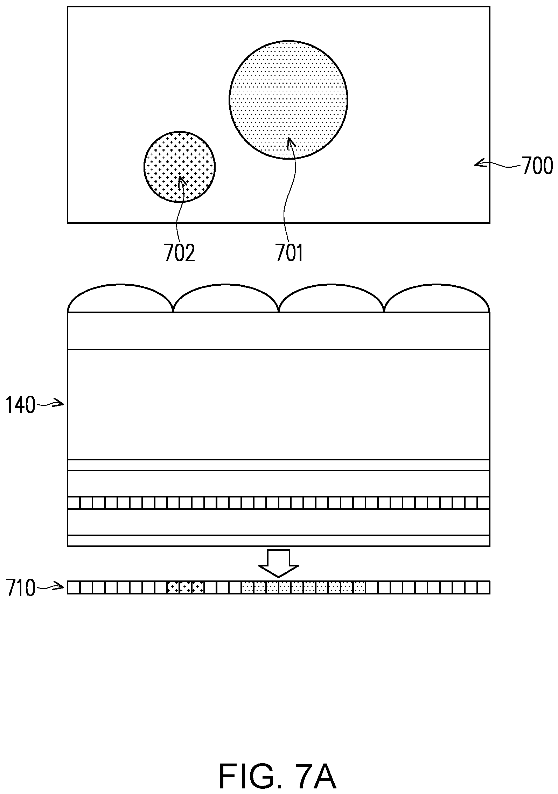

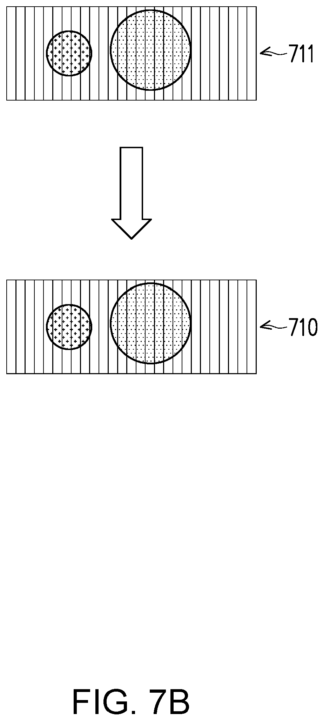

FIG. 7A is a schematic diagram showing displaying a two-dimensional image according to an embodiment of the disclosure. FIG. 7B is a schematic diagram of a display image corresponding to the two-dimensional image according to an embodiment of the disclosure. With reference to FIG. 7A and FIG. 7B, FIG. 7A and FIG. 7B are schematic diagrams of actual display images displayed by the display panel according to an embodiment of the disclosure. Referring to FIG. 1 and 7A, the image data S1 is taken as image data of the two-dimensional display image an example. The processing circuit 110 may adjust the image data S1 of the two-dimensional display image according to the switching signal S2 so as to perform display operations of the two-dimensional display image.

In this embodiment, the processing circuit 110 may enable the display panel 500 to display an actual display image 710 (the actual result of displaying the two-dimensional image on the flat display screen) according to the corrected image data. For example, as shown in FIG. 7A, a two-dimensional object image 701 and a two-dimensional object image 702 in a two-dimensional image 700 may be displayed at different corresponding positions of the actual display image 710, for example. Referring to FIG. 1 and FIG. 7B, the display panel 140 may display a result of the actual display image 710 as shown in FIG. 7B. The display result of the display panel 140 may be the same as the display result of an image 711. The image 711 is the actual display image 710. Therefore, the viewer may view the two-dimensional display image with the two-dimensional object image 701 and the two-dimensional object image 702 through the actual display image 710 displayed by the display panel 140.

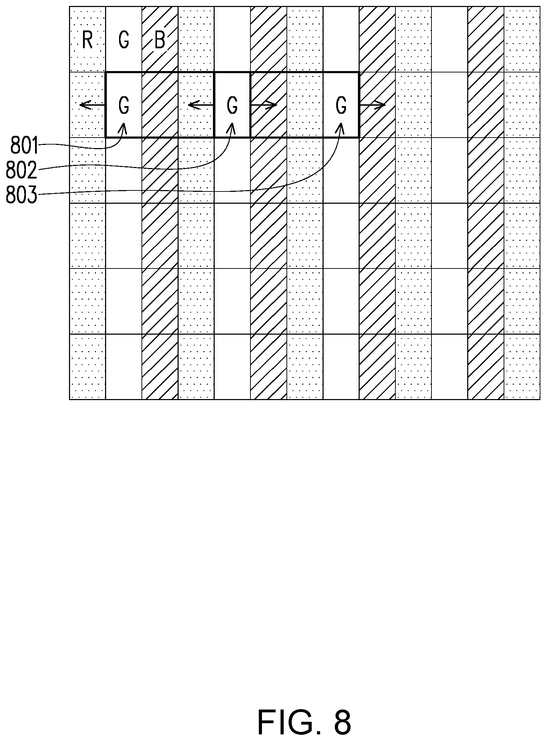

FIG. 8 is a schematic diagram of pixel brightness adjustment according to an embodiment of the disclosure. Referring to FIG. 1 and FIG. 8, a pixel array 800 (partial array range) of the display panel 140 may include a plurality of red pixels (R), a plurality of green pixels (G), and a plurality of blue pixels (B). Taking displaying a two-dimensional image and adjusting the brightness of a pixel 802 (that is, the green pixel (G)) in the pixel array 800 of the display panel 140 as an example, the embodiment is as follows. When the processing circuit 110 drives the display panel 140 to display a two-dimensional image according to the switching signal S2, the processing circuit 110 may switch a first brightness of the pixel 802 in the pixel array 800 of the display panel 140 to a second brightness. In this regard, the second brightness of the pixel 802 may be determined based on a plurality of brightness values in the image data S1 of two pixels 801 and 803 (both are green pixels (G)) of the same color adjacent to the pixel 802 in the horizontal direction and a plurality of weight values of the correction algorithm 111. In this embodiment, the processing circuit 110 may multiply the brightness values (or grayscale values) of the pixels 801 to 803 by the corresponding weight values and then add the results together to obtain a new brightness value of the pixel 802. The correction algorithm 111 may, for example, store the plurality of weight values in the form of the following Matrix (1).

$$[\text{WA} \quad \text{WB} \quad \text{WC}] \dots\dots\dots\dots\text{Matrix (1)}$$

For example, the pixels 801 to 803 may have brightness values A, B, and C, respectively. Matrix (1) includes, for example, a weight value WA, a weight value WB, and a weight value WC. The sum of the weight value WA, the weight value WB, and the weight value WC is equal to 1. In an embodiment, the weight value WB may be greater than or equal to the weight value WA and the weight value WC, but the disclosure is not limited thereto. The magnitude of the weight value may be negatively correlated with the distance from the pixel 802. Therefore, a brightness value (B') of the pixel 802 after correction may be calculated as shown in the following Formula (1).

$$B' = A * \text{WA} + B * \text{WB} + C * \text{WC} \dots\dots\dots\dots\text{Formula (1)}$$

However, in an embodiment of the disclosure, the second brightness of the pixel 802 may also be determined based on a plurality of brightness values in the image data S1 of a plurality of pixels (not limited to two, and Matrix (1) may also be a 1×5 matrix or a 1×7 matrix, for example) of the same color adjacent to the pixel 802 in the horizontal direction and a plurality of weight values of the correction algorithm 111. Alternatively, in another embodiment of the disclosure, the second brightness of the pixel 802 may also be determined based on a plurality of brightness values in the image data S1 of a plurality of pixels (not limited to two) of the same color adjacent to the pixel 802 in the vertical direction and a plurality of weight values of the correction algorithm 111.

In addition, it is worth noting that the brightness of each pixel (or sub-pixel) in the image 800 may be corrected according to the corresponding multiple brightness values in the original image data S1 and the same weight distribution as Matrix (1) or the corresponding multiple weight values with different weight distributions. Therefore, the two-dimensional image actually displayed by the display panel 140 seen by human eyes can have a good display effect.

In addition, in this embodiment, the haze of the protective layer 511 and the cover layer 512 is less than 10%, but the disclosure is not limited thereto. On one hand, it helps to maintain the display quality of three-dimensional images. On the other hand, it optimizes the display quality of two-dimensional images after adjusting the brightness weights of each pixel.

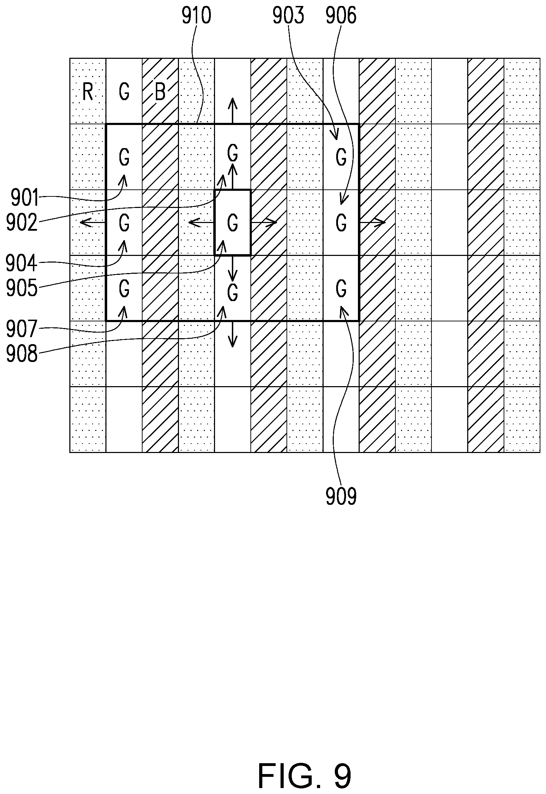

FIG. 9 is a schematic diagram of pixel brightness adjustment according to an embodiment of the disclosure. Referring to FIG. 1 and 9, a pixel array 900 (partial array range) of the display panel 140 may include a plurality of red pixels (R), a plurality of green pixels (G), and a plurality of blue pixels (B). Taking displaying a two-dimensional image and adjusting the brightness of a pixel 905 (that is, the green pixel (G)) in the pixel array 900 of the display panel 140 as an example, the embodiment is as follows. When the processing circuit 110 drives the display panel 140 to display a two-dimensional image according to the switching signal S2, the processing circuit 110 may switch a first brightness of the pixel 905 in the pixel array 900 of the display panel 140 to a second brightness. In this regard, the second brightness of the pixel 905 may be determined based on a plurality of brightness values in the image data S1 of multiple pixels 901 to 904 and 906 to 909 (all green pixels (G)) of the same color adjacent to the pixel 905 in a preset area 910 and a plurality of weight values of the correction algorithm 111. In this embodiment, the processing circuit 110 may multiply the brightness values (or grayscale values) of the pixels 901 to 909 by the corresponding weight values and then add the results together to obtain a new brightness value of the pixel 905. The correction algorithm 111 may, for example, store the plurality of weight values in the form of the following Matrix (2).

$$\begin{bmatrix} WA & WB & WC \\ WD & WE & WF \\ WG & WH & WI \end{bmatrix} \ldots\ldots\ldots\ldots Matrix\ (2)$$

For example, the pixels 901 to 909 may have brightness values A to I, respectively. Matrix (2) includes, for example, weight values WA to WI. The sum of the weight values WA to WI is equal to 1. The weight value WE may be greater than the weight value WB and the weight value WH. The weight value WB and the weight value WH may be greater than the weight value WA and the weight value WI. The weight value WA and the weight value WI may be greater than the weight value WD and the weight value WF. The weight value WD and the weight value WF may be greater than the weight value WC and the weight value WG. In an embodiment, the magnitude of the weight value may be negatively correlated with the distance from the pixel 905. Therefore, a brightness value (E') of the pixel 902 after correction may be calculated as shown in the following Formula (2).

$$E' = A*WA + B*WB + C*WC + D*WD + E*WE + F*WF + G*WG + H*$$

$$WH + I*WI \ldots\ldots\ldots\ldots Formula\ (2)$$

However, in an embodiment of the disclosure, the preset area 910 may also be a range including a plurality of pixels of the same color of 5×5 or 7×7, and the disclosure is not limited to the illustration in FIG. 9.

In addition, it is worth noting that the brightness of each pixel (or sub-pixel) in the image 900 may be corrected according to the corresponding brightness values in the original image data S1 and the weight distribution as Matrix (2) or the corresponding multiple weight values with different weight distributions. Therefore, the two-dimensional image actually displayed by the display panel 140 seen by human eyes can have a good display effect.

In addition, in this embodiment, the haze of the protective layer 511 and the cover layer 512 is less than 10%, but the disclosure is not limited thereto. On one hand, it helps to maintain the display quality of three-dimensional images. On the other hand, it optimizes the display quality of two-dimensional images after adjusting the brightness weights of each pixel.

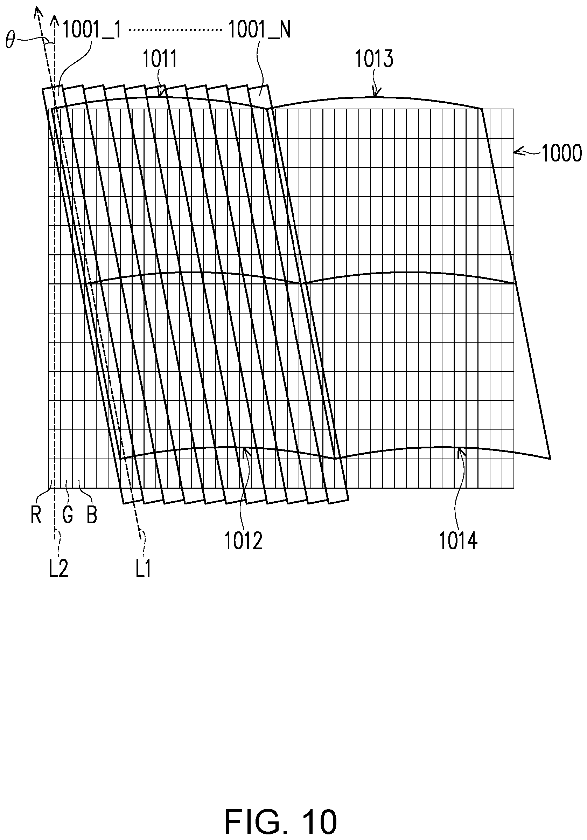

FIG. 10 is a schematic diagram of pixel brightness adjustment according to an embodiment of the disclosure. Referring to FIG. 1 and FIG. 10, in the embodiment, a pixel array 1000 (partial array range) of the display panel 140 may include a plurality of red pixels (R), a plurality of green pixels (G), and a plurality of blue pixels (B). In this embodiment, the lens array of the display panel 140 may include cylindrical lenses 1011 to 1014. There is an angle θ between an axis without refractive power L1 of each of the cylindrical lenses 1011 to 1014 and a vertical axis L2 of the pixel array 1000. In this embodiment, the plurality of pixels of the pixel array 1000 may be divided into a plurality of cluster sets according to different light emission angles corresponding to the cylindrical lenses 1011 to 1014.

Taking displaying a two-dimensional image and corresponding to different light emission angles of the cylindrical lenses 1011 and 1012 as an example, a portion of the plurality of pixels of the pixel array 1000 may correspond to a plurality of cluster sets 1001_1 to 1001_N, respectively, in which N is a positive integer. In this embodiment, the processing circuit 110 may adjust the brightness of a pixel belonging to the cluster set 1001_1 based on a plurality of brightness values in the image data S1 of a plurality of adjacent pixels of the same color and a plurality of weight values in the correction algorithm 111. Furthermore, the processing circuit 110 may adjust the brightness of a pixel belonging to the cluster set 1001_2 based on another plurality of brightness values in the image data S1 of other adjacent pixels of the same color and another plurality of weight values in the correction algorithm 111. In this regard, the weight distribution of the plurality of weight values used to correct the pixel belonging to the cluster set 1001_1 may be different from the weight distribution of the another plurality of weight values used to correct the pixel belonging to the cluster set 1001_2. In other words, the brightness correction method for different pixels of the pixel array 1000 may be determined according to the corresponding light emission angle.

In addition, in this embodiment, the haze of the protective layer 511 and the cover layer 512 is less than 10%, but the disclosure is not limited thereto. On one hand, it helps to maintain the display quality of three-dimensional images. On the other hand, it optimizes the display quality of two-dimensional images after adjusting the brightness weights of each pixel.

In summary, the switchable display system and the switching method disclosed in the disclosure may switch between displaying a three-dimensional image or a two-dimensional image. Furthermore, when displaying a two-dimensional image, the display system disclosed herein may automatically adjust the image data to correct the brightness of at least a portion of the pixels of the display panel, so that the two-dimensional image displayed by the display panel can have a good display effect and display resolution.

**Claims**

1. A switchable display system (100, 300, 400), comprising:

   a display panel (140, 340, 440, 500) comprising a plurality of pixels, wherein the plurality of pixels comprise a first pixel;
   an image source (120, 320, 420) configured to provide image data (S1);
   a switching signal source (130, 330, 430) configured to provide a switching signal (S2); and
   a processing circuit (110, 310, 410) coupled to the display panel (140, 340, 440, 500), the image source (120, 320, 420), and the switching signal source (130, 330, 430), storing a correction algorithm (111, 311, 411), and configured to drive the display panel (140, 340, 440, 500) to display a three-dimensional image or a two-dimensional image (700) according to the switching signal (S2),
   wherein the processing circuit (110, 310, 410) switches a first brightness of the first pixel to a second brightness in response to the processing circuit (110, 310, 410) driving the display panel (140, 340, 440, 500) to display the two-dimensional image (700) according to the switching signal (S2),
   wherein the second brightness is determined based on a plurality of brightness values in the image data (S1) of a plurality of pixels of same color adjacent to the first pixel and a plurality of weight values of the correction algorithm (111, 311, 411).

2. The switchable display system (100, 300, 400) according to claim 1, further comprising:

   a display device interface circuit (350, 450) coupled to the image source (120, 320, 420) and the processing circuit (110, 310, 410); and
   a three-dimensional display device,
   wherein the processing circuit (110, 310, 410), the display panel (140, 340, 440, 500), and the display device interface circuit (350, 450) are disposed in the three-dimensional display device.

3. The switchable display system (100, 300, 400) according to claim 1, further comprising:

   a display device interface circuit (350, 450) coupled to the processing circuit (110, 310, 410) and the display panel (140, 340, 440, 500); and
   a three-dimensional display device (301, 401),
   wherein the display panel (140, 340, 440, 500) and the display device interface circuit (350, 450) are disposed in the three-dimensional display device (301, 401).

4. The switchable display system (100, 300, 400) according to claim 1, wherein the display panel (140, 340, 440, 500) comprises:

   a display layer comprising a pixel array (800, 900, 1000);
   a lens array (510) formed on the display layer and comprising a plurality of cylindrical lenses (1011 to 1014);
   a protective layer (511) covering the plurality of cylindrical lenses (1011 to 1014); and
   a cover layer (512) formed on the protective layer (511).

5. The switchable display system (100, 300, 400) according to claim 4, wherein a haze provided by the protective layer (511) and the cover layer (512) is less than 10%.

6. The switchable display system (100, 300, 400) according to claim 4, wherein there is an angle ($\theta$) between an axis (L1) without refractive power of each of the plurality of cylindrical lenses (1011 to 1014) and a vertical axis (L2) of the pixel array (503).

7. The switchable display system (100, 300, 400) according to claim 1, wherein the second brightness is determined based on the plurality of brightness values in the image data (S1) of the plurality of pixels of the same color adjacent to the first pixel along a first direction and the plurality of weight values of the correction algorithm (111, 311, 411).

8. The switchable display system (100, 300, 400) according to claim 1, wherein the second brightness is determined based on the plurality of brightness values in the image data (S1) of the plurality of pixels of the same color adjacent to the first pixel in a preset area (910) and the plurality of weight values of the correction algorithm (111, 311, 411).

9. The switchable display system (100, 300, 400) according to claim 1, wherein the plurality of pixels comprise a second pixel,

   wherein the processing circuit (110, 310, 410) switches a third brightness of the second pixel to a fourth brightness in response to the processing circuit (110, 310, 410) driving the display panel (140, 340, 440, 500) to display the two-dimensional image (700) according to the switching signal (S2),
   wherein the fourth brightness is determined based on another plurality of brightness values in the image data (S1) of a plurality of pixels of same color adjacent to the second pixel and another plurality of weight values of the correction algorithm (111, 311, 411),
   wherein the first pixel and the second pixel correspond to different light emission angles respectively.

10. A switching method of a display system (100, 300, 400), comprising:

    providing image data (S1) through an image source (120, 320, 420);
    providing a switching signal (S2) through a switching signal source (130, 330, 430);
    driving, through a processing circuit (110, 310, 410), a display panel (140, 340, 440, 500) to display a three-dimensional image or a two-dimensional image (700) according to the switching signal (S2); and
    switching, through the processing circuit (110, 310, 410), a first brightness of a first pixel to a second brightness in response to the processing circuit (110, 310, 410) driving the display panel (140, 340, 440, 500) to display the two-dimensional image (700) according to the switching signal (S2),
    wherein the second brightness is determined based on a plurality of brightness values in the image data (S1) of a plurality of pixels of same color adjacent to the first pixel and a plurality of weight values of a correction algorithm (111, 311, 411).

11. The switching method of the display system (100, 300, 400) according to claim 10, wherein the display system (100, 300, 400) comprises a display device interface circuit (350, 450) and a three-dimensional display device (301, 401),

    wherein the display device interface circuit (350, 450) is coupled to the image source (120, 320, 420) and the processing circuit (110, 310, 410),
    wherein the processing circuit (110, 310, 410), the display panel (140, 340, 440, 500), and the display device interface circuit (350, 450) are disposed in the three-dimensional display device (301, 401).

12. The switching method of the display system (100, 300, 400) according to claim 10, wherein the display system (100, 300, 400) comprises a display device interface circuit (350, 450) and a three-dimensional display device (301, 401),

    wherein the display device interface circuit (350, 450) is coupled to the processing circuit (110, 310, 410) and the display panel (140, 340, 440, 500),
    wherein the display panel (140, 340, 440, 500) and the display device interface circuit (350, 450) are disposed in the three-dimensional display device (301, 401).

13. The switching method of the display system (100, 300, 400) according to claim 10, wherein the second brightness is determined based on the plurality of brightness values in the image data (S1) of the plurality of pixels of the same color adjacent to the first pixel along a first direction and the plurality of weight values of the correction algorithm (111, 311, 411).

14. The switching method of the display system (100, 300, 400) according to claim 10, wherein the second brightness is determined based on the plurality of brightness values in the image data (S1) of the plurality of pixels of the same color adjacent to the first pixel in a preset area (910) and the plurality of weight values of the correction algorithm (111, 311, 411).

**15.** The switching method of the display system (100, 300, 400) according to claim 10, wherein the plurality of pixels comprise a second pixel,

wherein the processing circuit (110, 310, 410) switches a third brightness of the second pixel to a fourth brightness in response to the processing circuit (110, 310, 410) driving the display panel (140, 340, 440, 500) to display the two-dimensional image (700) according to the switching signal (S2),

wherein the fourth brightness is determined based on another plurality of brightness values in the image data (S1) of a plurality of pixels of same color adjacent to the second pixel and another plurality of weight values of the correction algorithm (111, 311, 411),

wherein the first pixel and the second pixel correspond to different light emission angles respectively.

Switching signal source ~130

Image source ~120

~S1

Processing circuit ~110

Correction algorithm ~111

S2

~S3

Display panel ~140

100

FIG. 1

| Provide image data through an image source | ⌐S110 |

$\downarrow$

| Providing a switching signal through a switching signal source | ⌐S120 |

$\downarrow$

| Drive a display panel to display a three-dimensional image or a two-dimensional image according to the switching signal through a processing circuit | ⌐S130 |

$\downarrow$

| Switch a first brightness of a first pixel to a second brightness through the processing circuit when the processing circuit drives the display panel to display the two-dimensional image according to the switching signal | ⌐S140 |

# FIG. 2

FIG. 3

FIG. 4

EP 4 642 025 A1

| Cover layer | ~512 |
| Protective layer · · · · · · Lens · · · · · · | ~511<br>~510 |
| Lens substrate | ~509 |
| Adhesive layer | ~508 |
| Intermediate layer | ~507 |
| Adhesive layer | ~506 |
| | ~505 |
| Substrate | ~504 |
| | ~503 |
| Substrate | ~502 |
| | ~501 |

500

# FIG. 5

FIG. 6A

FIG. 6B

FIG. 7A

FIG. 7B

FIG. 8

FIG. 9

FIG. 10

**EUROPEAN SEARCH REPORT**

Application Number

EP 25 17 0903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/096156 A1 (KIM JOO-YOUNG [KR] ET AL) 28 April 2011 (2011-04-28) * paragraphs [0044] - [0045], [0056], [0077], [0081] - [0083], [0088] - [0089], [0092], [0097] - [0098], [0101]; figures 2-6 * | 1-15 | INV. H04N13/305 H04N13/359 H04N13/324 H04N13/351 |
| X | US 2009/051685 A1 (TAKAGI AYAKO [JP] ET AL) 26 February 2009 (2009-02-26) * paragraphs [0035], [0039], [0056]; figure 7 * | 1,10 | |
| X | US 2014/146143 A1 (PARK MYUNGSOO [KR] ET AL) 29 May 2014 (2014-05-29) * paragraphs [0025], [0037] - [0038], [0045], [0051], [0055]; figure 8 * | 1,10 | |

TECHNICAL FIELDS SEARCHED (IPC)

H04N

The present search report has been drawn up for all claims

| Place of search | Date of completion of the search | Examiner |
|---|---|---|
| Munich | 21 July 2025 | Penchev, Petyo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 17 0903

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | Publication date | Patent family member(s) | | Publication date |
|---|---|---|---|---|
| US 2011096156 A1 | 28-04-2011 | CN | 102055995 A | 11-05-2011 |
| | | JP | 5855336 B2 | 09-02-2016 |
| | | JP | 2011095730 A | 12-05-2011 |
| | | KR | 20110046127 A | 04-05-2011 |
| | | US | 2011096156 A1 | 28-04-2011 |
| US 2009051685 A1 | 26-02-2009 | CN | 101374244 A | 25-02-2009 |
| | | JP | 2009049751 A | 05-03-2009 |
| | | US | 2009051685 A1 | 26-02-2009 |
| US 2014146143 A1 | 29-05-2014 | CN | 103841397 A | 04-06-2014 |
| | | KR | 20140066613 A | 02-06-2014 |
| | | US | 2014146143 A1 | 29-05-2014 |

EPO FORM P0459

For more details about this annex : see Official Journal of the European Patent Office, No. 12/82